# EUROPÄISCHE PATENTANMELDUNG

(11) **EP 1 909 199 A1**
(43) Veröffentlichungstag der Anmeldung: **09.04.2008**
(21) Anmeldenummer: 07103929.1
(22) Anmeldetag: 12.03.2007
(51) Int. Cl.: G06F 17/30

(54) **Datenverarbeitungssystem zur Erzeugung eines Signals**

(30) Priorität: 06.10.2006 DE 202006015453 U
(71) Anmelder: CompuGroup Holding AG, 56070 Koblenz (DE)
(72) Erfinder: BROER, Jan, 56072, Koblenz (DE)
(74) Vertreter: Richardt, Markus Albert

(57) **Zusammenfassung**

Die Erfindung betrifft ein Datenverarbeitungssystem zur Erzeugung eines Signals mit
- einer Datenbank (102) zur Speicherung von Patientendatensätzen,
- einem Speicher (120) zur Speicherung eines Suchprofils (124),
- einem Mikroprozessor (128) zur Ausführung einer Abfrage der Datenbank mit dem Suchprofil, wobei das Suchprofil Kriterien für die Teilnahme eines Patienten an einem Disease Management Programm (DMP) beinhaltet, und zur Erzeugung des Signals, wenn das Suchprofil für einen der Patientendatensätze erfüllt wird.

## Beschreibung

Die Erfindung betrifft ein Datenverarbeitungssystem zur Erzeugung eines Signals, um Patienten für die Teilnahme an einem Disease Management Programm (DMP) zu identifizieren, sowie ein entsprechendes digitales Speichermedium und ein entsprechendes Verfahren zur Erzeugung eines besagten Signals.

Systematische Behandlungsprogramme für die ärztliche Versorgung von chronisch kranken Patienten werden im Allgemeinen als Disease Management Programme (DMP) bezeichnet. Durch DMP sollen Versorgungsabläufe für Patientengruppen optimiert werden. Dies bringt für chronische Patienten, welche an einem DMP teilnehmen, den Vorteil einer optimalen, für ihre chronische Krankheit angepasste Betreuungsmöglichkeit, wobei die Betreuung alle Arten moderner Kommunikation umfasst.

Der Einsatz telemedizinischer Geräte, statistischer Auswertungen über den Gesundheitszustand, sowie die Verwendung von Telefon, Email und SMS als Kommunikationsmittel zur ärztlichen Betreuung mittels Erinnerungen an Arztbesuche oder Medikamenteneinnahmen sind dabei Teil der besagten strukturierte Versorgung und systematischen medizinischen Behandlungsprogramme von Patienten.

Aus dem Stand der Technik sind verschiedene telemedizinische Vorrichtungen und Verfahren für Disease Management Programme (DMP) bekannt:

Aus US-A- 6,294,999 ist ein System zur Überwachung der Einhaltung einer verordneten Medikamentierung eines Patienten bekannt. Hierzu ist ein Abgabegerät für Medikamente vorgesehen, welches über eine Kommunikationsschnittstelle verfügt. Über dieses Kommunikationsschnittstelle werden Daten hinsichtlich der Entnahme von Medikamenten an Dritte übertragen, wie z. B. an Gesundheitsdienste, Apotheken oder andere Lieferanten von Gesundheitsprodukten und Dienstleistungen. Die Übertragung der Daten erfolgt dabei über ein Computernetzwerk.

Ferner können Daten auch mit verschiedenen anderen Geräten, z. B. Sportgeräten, ausgetauscht werden, um z. B. die Medikamentierung einer sportlichen Betätigung anzupassen. Ähnliche Systeme zur Überwachung der Einhaltung einer bestimmten Medikamentierung sind auch aus US-A-4,616,316 und US-A-5,408,443 bekannt. Entsprechende Geräte werden z. B. von E-pill (www.eppill.com) angeboten, wie z. B. ein Pagersystem, welches Nachrichten an Patienten sendet, um diese an die Einnahme von Medikamenten zu bestimmten Uhrzeiten zu erinnern.

Aus US-A-6,234,964 ist ein medizinisches Wissenssystem bekannt, welches für das computerbasierte Langzeitmanagement von Krankheiten, wie z. B. von Asthma und Diabetes, dient. Mittels dieses Systems wird der Gesundheitszustand des Patienten gefördert, indem dem Patienten Informationen angeboten werden und der Gesundheitszustand des Patienten präventiv überwacht wird. Die Überwachung dient als Grundlage zur Optimierung der Therapie.

Aus US-A-6,206,829 ist ein computerbasiertes Verfahren für die medizinische Diagnose über ein Computernetzwerk bekannt. Dabei wird eine medizinische Ferndiagnose über ein Telefon oder ein Computernetzwerk getroffen, indem Anamnesedaten und weitere Daten in einem wissensgestützten medizinischen Diagnosesystem verarbeitet werden. Entsprechende Ansätze sind auch aus US-A-4,712,562, US-A-4,531,527, US-A-4,838,275 und US-A-5,012,411 bekannt.

Aus US-A- 6,171,237 ist ein Überwachungssystem zur Überwachung des Gesundheitszustands eines Patienten bekannt. Dazu werden verschiedene medizinische Daten eines Patienten von für den Patienten konfigurierten Testeinheiten ermittelt und zu einer zentralen Überwachungsstation übertragen. Ähnliche Überwachungssysteme zeigen auch US-A-4,803,625, US-A-4,838,275, US-A-5,231,001 und US-A-5,012,411.

Aus US-A-6,167,362 ist ein elektronisches Gerät zur Information und Warnung eines chronisch kranken Patienten hinsichtlich der Konsequenzen seines Lebensstils und der Einhaltung bzw. Nichteinhaltung einer bestimmten Medikamentierung bekannt. Hierzu erzeugt das Gerät ein virtuelles "Haustier", welches die Konsequenzen eines bestimmten Verhaltens des Patienten symbolisch wiedergibt.

Aus US-A-6,159,147 ist eine Computerkarte zur Erfassung von echtzeitbiologischen Daten bekannt. Dies erlaubt es einen Personal Computer zu einem medizinischen Diagnosegerät auszubauen. Mittels dieser Computerkarte können unterschiedliche physiologische Daten, wie z. B. Blutdruck, Körpertemperatur, Atmungs-Rate, EKG-Signale, Blutalkohol und andere Werte erfasst werden.

Aus US-A- 6,112,182 ist ein Verfahren für das integrierte Management von pharmazeutischen und Gesundheitsdienstleistungen bekannt. Hierzu wird die Medikamentierungshistorie eines Patienten in einer Datenbank gespeichert. Eine aktuelle Verordnung eines Medikaments wird mit der Medikamentierungshistorie verglichen, um eine Plausibilitätsprüfung hinsichtlich der Korrektheit der Verordnung vorzunehmen. Neben der Medikamentierungshistorie können weitere physiologische Daten und verhaltensbezogene Daten des Patienten mit in die Prüfung einbezogen werden.

Aus US-A- 6,108,635 ist ein integriertes krankheitsbezogenes Informationssystem bekannt. Eine Datenbank mit krankheitsbezogenen Daten wird benutzt, um ein bestimmtes Behandlungsverfahren zur validieren.

Aus US-A-6,014,631 ist ein computerimplementiertes System zur Überprüfung der Medikamentierung eines Patienten bekannt. Mittels eines interaktiven Computerprogramms wird die Medikamentierung eines Patienten analysiert, geprüft und gegebenenfalls angepasst. Ein ähnliches Verfahren ist auch aus US-A- 4,839,822 bekannt.

Aus US-A-5,940,802 ist ein digitales Krankheitsmanagementsystem bekannt. Mittels Daten, welche den aktuellen Gesundheitszustand eines Patienten angeben, wird eine Risikoanalyse durchgeführt. Basierend auf dieser Risikoanalyse wird entschieden, ob eine sofortige Intervention erforderlich ist.

Aus US 2001 001 2913 A1 ist ein Krankheitsmanagementsystem mit einer Korrelationsbewertung bekannt, welches auf der Berechnung einer Metrik beruht. Basierend auf der Metrik kann eine Therapie des Patienten angepasst werden.

Die EP 1 351 181 B1 offenbart ein Computersystem und ein Verfahren zur Datenerfassung für die Ermittlung des Verlaufs einer chronischen Erkrankung, beispielsweise von Diabetes oder Asthma, sowie ein entsprechendes Computerprogramm.

Der Erfindung liegt die Aufgabe zugrunde, ein verbessertes Datenverarbeitungssystem zu schaffen, welches zu einer einfachen, automatischen Identifikation von Patienten, die zur Teilnahme an einem Disease Management Programm geeignet sind, dient. Das Datenverarbeitungssystem soll so ausgebildet sein, dass es sich für den flächendeckenden Einsatz in Arztpraxen oder bei anderen Erbringern medizinischer Leistungen eignet, mit minimalem Pflegeaufwand betrieben werden kann und sich in den Praxisalltag integrieren lässt.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Durch die Erfindung wird ein Datenverarbeitungssystem zur Erzeugung eines Signals mit einer Datenbank zur Speicherung von Patientendatensätzen, einem Speicher zur Speicherung eines Suchprofils und einem Mikroprozessor geschaffen. Der Mikroprozessor dient zur Ausführung einer Abfrage der Datenbank mit dem Suchprofil, wobei das Suchprofil Kriterien für die Teilnahme eines Patienten an einem DMP beinhaltet, und zur Erzeugung des Signals, wenn das Suchprofil für einen der Patientendatensätze erfüllt wird.

Erfindungsgemäß wird unter DMP der Einsatz von telemedizinischen Geräten für die strukturierte medizinische Versorgung von Patienten verstanden. Dabei können an sich aus dem Stand der Technik bekannte telemedizinische Geräte zum Einsatz kommen.

Beispielsweise handelt es sich bei dem Datenverarbeitungssystem um ein Praxis-EDV-System eines Arztes oder ein so genanntes Arzt-Informationssystem. Die von dem betreffenden Arzt behandelten Patienten sind in der Datenbank seines Datenverarbeitungssystems erfasst. Durch automatischen oder manuellen Start des Suchprofils kann der Arzt diejenigen seiner Patienten ermitteln, die sich für die Teilnahme an einem DMP eignen. Für die betreffenden Patienten erzeugt das Datenverarbeitungssystem ein geeignetes Signal, beispielsweise in Form einer Bildschirmausgabe, eines Ausdrucks und/oder durch Versand einer Mitteilung, insbesondere einer elektronische Mitteilung, etwa einer E-Mail oder SMS.

Das erfindungsgemäße Datenverarbeitungssystem kann auch ein Netzwerk von verschiedenen kleineren Datenverarbeitungssystemen sein, z.B. Arztinformationssysteme, Apothekencomputer, Krankenkassencomputer u.v.m. welche über das Internet oder ein beliebiges anderes Netzwerk miteinander verbunden sind.

Nach einer Ausführungsform der Erfindung dient das Datenverarbeitungssystem zur Ausführung eines Praxisprogramms, also insbesondere eines so genannten Arzt-Informationssystems. Das Datenverarbeitungssystem hat eine Schnittstelle zum Einlesen von Updates des Praxisprogramms. Diese Schnittstelle beinhaltet beispielsweise ein Lesegerät für einen Datenträger, wie zum Beispiel ein CD-ROM- und/oder DVD-Laufwerk. Zusammen mit dem Update des Praxisprogramms können auf dem betreffenden Datenträger ein oder mehrere Suchprofile gespeichert sein. Diese Suchprofile werden beim Einlesen des Updates des Praxisprogramms über diese Schnittstelle mit in das Datenverarbeitungssystem eingelesen.

Alternativ oder zusätzlich kann das Datenverarbeitungssystem über eine weitere Schnittstelle zum Empfang der Updates und/oder des Suchprofils über eine Kommunikationsverbindung, wie zum Beispiel über ein Netzwerk, insbesondere das Internet verfügen. Ein neues Suchprofil kann dabei durch einen Push oder Pull-Dienst zu dem Datenverarbeitungssystem übertragen werden.

Das Datenverarbeitungssystem kann so ausgebildet sein, dass unmittelbar nach dem Einlesen eines Suchprofils beziehungsweise nach dem Empfang eines Suchprofils über eine Kommunikationsverbindung mit Hilfe dieses Suchprofils eine Datenbankabfrage durchgeführt wird, um die relevanten Patientendatensätze zu ermitteln. Dies kann eine vorherige Bestätigung durch einen Benutzer erfordern oder vollautomatisch durchgeführt werden.

Beispielsweise erfolgt die Abfrage der Datenbank mit dem neuen Suchprofil zu einem definierten Zeitpunkt, wie zum Beispiel während der Nacht, wenn das Datenverarbeitungssystem nicht oder nur wenig belastet ist, um so während des Praxisbetriebs eine Verlängerung der Antwortzeit (Response oder Latency time) des Datenverarbeitungssystems aufgrund der Durchführung des Suchprofils zu vermeiden. Allerdings kann die Abfrage der Datenbank auch jederzeit manuell durch einen Benutzer gestartet werden.

Nach einer Ausführungsform der Erfindung erfolgt, sobald z.B. der behandelnde Arzt eine Patientenakte aufruft, neu erfasst oder bearbeitet, ein automatisches Anwenden des Suchprofils auf den entsprechenden Datensatz der Datenbank. Dies hat den Vorteil, dass zeitnah feststellbar ist, ob ein Patient zur Teilnahme an einem DMP geeignet ist, so dass der behandelnde Arzt in diesem Fall den Patienten sofort unterrichten kann und mit diesem die Teilnahme an einem Disease Management Programm durchsprechen kann.

Die Bearbeitung einer Patientenakte schließt dabei alle Formen der Eingabe von Daten in die Patientenakte ein - insbesondere Diagnosen, verordnete Medikamente, der Krankheitsverlauf des Patienten, Amnesedaten und Symptomerscheinungen wie besondere Blutwerte, Blutdruck, Fieber usw. Ebenfalls möglich ist in diesem Zusammenhang die Verwendung von z.B. Krankenhauseinweisungen, welche in der Patientenakte vermerkt werden. Vorzugsweise schließt dies eine entsprechende Einweisungsdiagnose mit ein.

Nach einer Ausführungsform der Erfindung ist die Datenbank so ausgebildet, dass mit Hilfe des Suchprofils ermittelte Patientendatensätze mit einer Markierung versehen werden. Bei dieser Markierung kann es sich beispielsweise um ein so genanntes Flag handeln.

Wenn der behandelnde Arzt anlässlich einer Visite eines seiner Patienten dessen virtuelle Patientenkarteikarte durch das Praxisprogramm öffnet, so wird geprüft, ob der zu der virtuellen Patientenkarteikarte korrespondierende Patientendatensatz mit der Markierung versehen ist. Ist dies der Fall, so generiert das Datenverarbeitungssystem eine Meldung, beispielsweise durch Anzeige eines Mitteilungsfensters über die grafische Benutzerschnittstelle des Praxisprogramms.

Der Arzt kann seinen Patienten dann darüber unterrichten, dass er oder sie zur Teilnahme an einem Disease Management Programm berechtigt ist. Wenn der Patient mit der Teilnahme einverstanden ist, kann dies der behandelnde Arzt durch Eingabe einer entsprechenden Bestätigung in das Praxisprogramm eingeben. Aufgrund der Bestätigung kann automatisch eine Meldung des Patienten bei dem oder den DMP-Vertragspartnern erfolgen. Auch dies kann automatisch durch Ausdruck eines Formulars und/oder auf elektronischem Wege, wie zum Beispiel per e-mail erfolgen.

Nach einer Ausführungsform der Erfindung hat das Datenverarbeitungssystem eine Nutzerschnittstelle zur maschinellen Erfassung von Patientendaten, wobei das Suchprofil aufgrund der Erfassung der Patientendaten nur für den betreffenden Patientendatensatz gestartet wird. Bei dieser Nutzerschnittstelle kann es sich zum Beispiel um ein Chipkartenlesegerät handeln.

Die Erfassung der Daten eines neuen Patienten erfolgt beispielsweise mit Hilfe von dessen Patientenchipkarte, die auch als elektronische Gesundheitskarte bezeichnet wird. Zur Erfassung der Daten wird die Patientenchipkarte in ein Chipkartenlesegerät eingeführt. Daraufhin werden Patientendaten aus der Chipkarte in das Datenverarbeitungssystem übertragen.

Auf diese neu erfassten Patientendaten wird das Suchprofil angewendet, um so festzustellen, ob der neue Patient zur Teilnahme an dem DMP geeignet ist. Wenn dies der Fall ist, kann eine Markierung des entsprechenden neu gespeicherten Patientendatensatz in der Datenbank erfolgen und/oder unmittelbar die Ausgabe eines Signals, um den Patienten über seine Teilnahmemöglichkeit an dem DMP zu informieren. Dadurch ist eine einfache und effiziente Möglichkeit gegeben, die Qualifikation von Patienten für ein DMP zu überwachen. Da die Überwachung vollautomatisch im Hintergrund abläuft, bedeutet dies keinen oder keinen wesentlichen zusätzlichen Arbeitsauwand für den behandelnden Arzt. Dennoch ist durch die Überwachung einer Teilnahmemöglichkeit von Patienten an einem DMP zum Zweck einer optimalen Patientenversorgung gewährleistet.

Nach einer Ausführungsform der Erfindung umfasst das Datenverarbeitungssystem ferner ein Modul, welches zur automatisierten Generierung einer Erinnerung an Termine in Form einer Nachricht für DMP-Teilnehmer ausgebildet ist, wobei die Termine in der Datenbank zur Speicherung von Patientendatensätzen enthalten sind. Dabei dient eine Kommunikationsschnittstelle zur Übermittlung der Nachricht an DMP-Teilnehmer, wobei die Übermittlung automatisiert per Telefon und/oder E-Mail und/oder SMS und/oder Brief durchführbar ist. Denkbar sind hier jedoch alle Arten moderner Kommunikationsmittel.

Die automatisierte Erinnerung von DMP-Teilnehmern an Termine hat den Vorteil, dass der Arzt in unterstützender Weise den Behandlungsvorgang von DMP-Teilnehmern, d.h. Patienten, überwachen kann. Auf die patientenseitige Wahrnehmung von Terminen, welche z.B. die Einnahme von Medikamenten, die Durchführung aller Arten von begleitender gesundheitlicher Überwachung des Patienten wie Fieber- oder Blutdruckmessungen, oder auch Arztbesuche, kann so gezielt hingearbeitet werden.

Nach einer Ausführungsform der Erfindung umfasst das Datenverarbeitungssystem ferner ein Modul zur Durchführung statistischer Auswertungen über den Gesundheitszustand von DMP-Teilnehmern. Damit ist es dem behandelnden Arzt oder auch einer jeder anderen Institution, welche Teil des DMP ist wie z.B. eine Krankenkasse möglich, einen detaillierten Krankheitsverlauf eines DMP-Teilnehmers zu überwachen und gegebenenfalls Maßnahmen zur veränderten Therapierung usw. zu ergreifen. Für Krankenkassen ist dies insbesondere von Bedeutung, da dadurch objektiv z.B. die Durchführung besonderer Rehabilitationsmaßnahmen beurteilt werden kann.

Nach einer weiteren Ausführungsform der Erfindung umfasst das Datenverarbeitungssystem eine Schnittstelle zur Kommunikation mit telemedizinischen Geräten von DMP-Teilnehmern. Dies ermöglicht es z.B. einem behandelnden Arzt, sowohl zeitnah über den Gesundheitszustand eines Patienten informiert zu werden, als auch bei telemedizinischen Geräten mit therapeutischen Eigenschaften z.B. die automatisierte Verabreichung von Medikamenten gezielt zu verändern und anzupassen. Dies kann z.B. als Antwort auf die statistische Auswertung des Gesundheitszustands des Patienten erfolgen. Um eine Kommunikation mit einem bestimmten telemedizinischen Gerät eines Patienten über die Kommunikationsschnittstelle aufzunehmen, bietet sich entweder eine Kommunikation an, bei welcher der Arzt Kontakt mit dem Patientenseitigen telemedizinischen Gerät aufnimmt, oder eine Kommunikation, die von Patientenseite aus zum Arzt initiiert wird. Im Falle einer von seitens des Arztes initiierten Kommunikation müssen z.B. mittels eines im Datenverarbeitungssystem implementierten Registierungsmoduls vorab Kontaktdaten des telemedizinischen Geräts aufgenommen werden. Dies kann z.B. bei möglicher Internetanbindung des telemedizinischen Geräts durch Aufnahme einer IP-Adresse, bei telemedizinischem Gerät mit integriertem GSM-Modul durch Speicherung einer Telefonnummer realisiert sein. Nach Kontaktaufnahme durch das Datenverarbeitungssystem kann dann ein Abfragen des telemedizinischen Geräts erfolgen.

Im Falle der Kontaktaufnahme seitens des Patienten kann dem Patient eine Zugangskennung und Passwort, sowie eine Webseite mitgeteilt werden, über welche der Patient Daten des telemedizinischen Geräts an das Datenverarbeitungssystem übertragen kann. Diese Übertragung kann sowohl nach manueller Eingabe von Daten durch den Patienten erfolgen, als auch automatisch durch Anschließen des telemedizinischen Geräts über z.B. die USB-Schnittstelle, eine Bluetooth-Schnittstelle usw. an ein entsprechendes Heim-Computersystem des Patienten. Alternativ dazu kann der Datenaustausch auch über eine Chipkarte vorgenommen werden, welche in dem telemedizinischen Gerät ausgebildet ist und welche entsprechende Daten speichert, welche dann nach Einführen der Chipkarte in ein entsprechendes Lesegerät des Heim-Computersystems des Patienten ausgelesen und an das Datenverarbeitungssystem übertragen werden.

In einem weiteren Aspekt betrifft die Erfindung ein digitales Speichermedium mit Programmmitteln zur Erzeugung eines Signals. Bei den Programmmitteln handelt es sich um von einem Computer ausführbare Instruktionen, die die folgenden Programmkomponenten beinhalten: Eine erste Programmkomponente zur Speicherung von Patientendatensätzen in einer Datenbank, eine zweiten Programmkomponente zum Zugriff auf ein Suchprofil, und eine dritte Programmkomponente zur Ausführung einer Abfrage der Datenbank mit dem Suchprofil, wobei das Suchprofil Kriterien für die Teilnahme eines Patienten an einem DMP beinhaltet und zur Erzeugung des Signals, wenn das Suchprofil für einen der Patientendatensätze erfüllt wird.

Bei dem digitalen Speichermedium kann es sich um einen Datenträger handeln, auf dem die Programminstruktionen gespeichert sind. Beispielsweise wird auf diesem Datenträger zusammen mit den erfindungsgemäßen Programminstruktionen auch ein Update des Praxisprogramms geliefert, insbesondere eines Arzt-Informationssystems, dessen integraler Bestandteil die erfindungsgemäßen Programmmittel sein können. Bei dem digitalen Speichermedium kann es sich auch um einen Speicher eines Servercomputers handeln, auf dem die Programmmittel zum Herunterladen bereitgehalten werden.

In einem weiteren Aspekt betrifft die Erfindung ein Verfahren zur Erzeugung eines Signals durch ein Datenverarbeitungssystem, wobei das Datenverarbeitungssystem eine Datenbank zur Speicherung von Patientendatensätzen aufweist, einen Speicher zur Speicherung eines Suchprofils aufweist, wobei das Suchprofil Kriterien für die Teilnahme eines Patienten an einem Disease Management Programm (DMP) beinhaltet und einen Mikroprozessor zur Ausführung einer Abfrage der aufweist, mit den Schritten der Abfrage der Datenbank mit dem Suchprofil, und der anschließenden Ausgabe eines Signals. Dabei wird die Abfrage der Datenbank auf alle Patientendatensätze der Datenbank angewendet wird. Die Abfrage der Datenbank durch Anwenden des Suchprofils auf einen neu erfassten oder bearbeiteten Patientendatensatz erfolgt.

Nach einer Ausführungsform der Erfindung erfolgt die Abfrage der Datenbank bei geringer Systemauslastung des Datenverarbeitungssystems.

Nach einer Ausführungsform der Erfindung erfolgt die Erfassung eines neuen Patientendatensatzes über eine Nutzerschnittstelle, wobei es sich bei der Nutzerschnittstelle um ein Chipkartenlesegerät handelt. So kann z.B. die Erfassung der Daten mit Hilfe einer elektronischen Gesundheitskarte erfolgt.

Nach einer Ausführungsform der Erfindung werden mit Hilfe des Suchprofils ermittelte Patientendatensätze mit einer Markierung versehen.

Nach einer Ausführungsform der Erfindung erfolgt automatisiert eine Erinnerung an Termine in Form einer Nachricht für DMP-Teilnehmer, wobei die Termine in der Datenbank zur Speicherung von Patientendatensätzen enthalten sind. Dabei erfolgt die Übermittlung per Telefon und/oder E-Mail und/oder SMS und/oder Brief.

Nach einer Ausführungsform der Erfindung erfolgt eine statistische Auswertung des Gesundheitszustands von DMP-Teilnehmern.

Nach einer Ausführungsform der Erfindung erfolgt eine Kommunikation mit telemedizinischen Geräten von DMP-Teilnehmern.

Im weiteren werden bevorzugten Ausführungsbeispiele der Erfindung mit Bezugnahme auf die Zeichnungen näher erläutert. Es zeigen:
- Figur 1:: ein Blockdiagramm einer Ausführungsform eines erfindungsgemäßen Datenverarbeitungssystems,
- Figur 2:: ein Flussdiagramm eines erfindungsgemäßen Verfahrens zur Erzeugung eines Signals,
- Figur 3:: ein weiteres Flussdiagramm eines erfindungsgemäßen Verfahrens zur Erzeugung eines Signals.

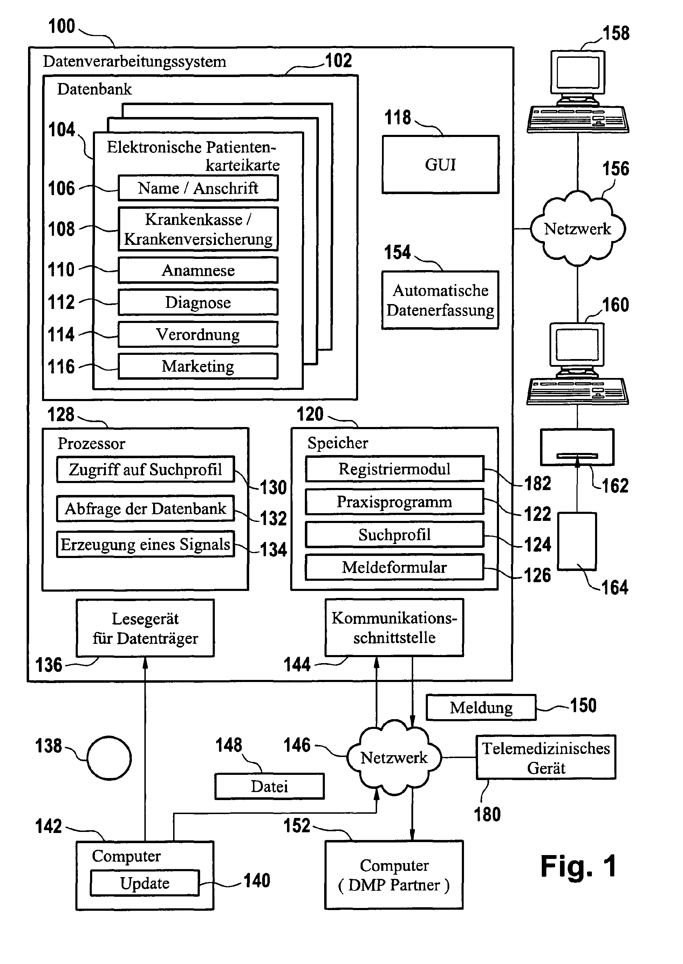

Bei dem in der Figur 1 schematisch dargestellten Datenverarbeitungssystem 100 kann es sich zum Beispiel um den Server-Computer oder einen Client-Computer eines Praxis-EDV-Systems eines Arztes, einer Gemeinschaftspraxis oder einer anderen medizinischen Einrichtung handeln. Insbesondere kann es sich bei dem Datenverarbeitungssystem 100 um eine Komponente, insbesondere einen Server-Computer, eines Arzt-Informationssystems handeln.

Das Datenverarbeitungssystem 100 hat eine Datenbank 102, die vorzugsweise als relationale Datenbank ausgebildet ist. In der Datenbank 102 ist für jeden registrierten Patienten eine elektronische Patientenkarteikarte 104 gespeichert, die verschiedene Datenfelder beinhaltet, wie zum Beispiel ein Datenfeld 106 zur Speicherung des Namens und der Anschrift des Patienten, ein Datenfeld 108 zur Speicherung der Zugehörigkeit des Patienten zu einer Krankenkasse oder Krankenversicherung, ein Datenfeld 110 zur Speicherung von Anamnesedaten, ein Datenfeld 112 zur Speicherung von Diagnosedaten und ein Datenfeld 114 zur Speicherung von Verordnungsdaten. Je nach dem Detaillierungsgrad der in den Datenfeldern 106 bis 114 zur Verfügung gestellten Informationen können diese Datenfelder jeweils in weitere Datenfelder untergliedert sein.

In der hier betrachteten Ausführungsform hat die elektronische Patientenkarteikarte 104 ein weiteres Datenfeld 116. Dieses Datenfeld 116 dient zur Ausgabe eines Signals, beispielsweise in Form einer textuellen und/oder grafischen Markierung, welche angibt, dass der betreffende Patient ein Suchprofil mit den Kriterien für die Teilnahme an einem Disease Management Programm erfüllt.

Die elektronische Patientenkarteikarte 104 wird von der Datenbank 102 durch Auslesen der entsprechenden Informationen aus den relationalen Datenbanktabellen der Datenbank 102 generiert und über eine grafische Benutzerschnittstelle (GUI) 118 ausgegeben.

Das Datenverarbeitungssystem 100 hat ferner ein Datenspeichersystem 120, also beispielsweise einen Arbeitsspeicher und einen nicht-flüchtigen Speicher, wie zum Beispiel eine Festplatte. In dem Datenspeichersystem 120 ist ein Praxisprogramm 122 gespeichert, beispielsweise die Programminstruktionen eines Arzt-Informationssystems. Ferner ist in dem Datenspeichersystem 120 ein Suchprofil 124 gespeichert. Bei dem Suchprofil 124 kann es sich beispielsweise um eine so genannte SQL-Query handeln, dass heißt eine strukturierte Datenbankabfrage, die sich der Datenfelder der Datenbank 102 bedient.

Durch das Suchprofil 124 sind die Kriterien festgelegt, die ein Patient für die Teilnahme an einem DMP erfüllen muss. In dem Datenspeichersystem 120 können auch mehrerer solcher Suchprofile 124 für verschiedene DMPs abgespeichert sein. Das oder die Suchprofile 124 können einen integralen Bestandteil des Praxisprogramms 122 bilden.

In dem Datenspeichersystem 120 können ferner Formulare zur Erstellung von Dokumenten, die im Rahmen der Teilnahme an einem DMP benötigt werden, gespeichert sein, wie z.B. ein Meldeformular 126 und/oder andere Formulare etwa zur Mitteilung von Anamnesedaten oder anderen Patientendaten. Das Meldeformular 126 kann für die Anmeldung eines Patienten zur Teilnahme an dem entsprechenden DMP verwendet werden. Das Meldeformular 126 beinhaltet Datenfelder für Angaben zu einem Patienten und dessen Krankenkasse oder Krankenversicherung und/oder einem anderen Partnerunternehmen des DMP.

Das Datenverarbeitungssystem 100 hat zumindest einen Mikroprozessor 128 zur Durchführung der Programminstruktionen des Praxisprogramms 122 und zur Durchführung des Suchprofils 124. Das Praxisprogramm 122 beinhaltet beispielsweise eine Programmkomponente 130 mit Programminstruktionen zum Zugriff des Prozessors 128 auf das Suchprofil 124, eine Programmkomponente 132 mit Programminstruktionen zur Abfrage der Datenbank 102 mit Hilfe des Suchprofils 124 und eine Programmkomponente 134 mit Programminstruktionen zur Erzeugung eines Signals, wenn bei der Abfrage der Datenbank zumindest ein "Treffer" ermittelt wird, dass heißt ein die Kriterien erfüllender Patientendatensatz gefunden worden ist.

Das Datenverarbeitungssystem 100 hat eine Schnittstelle 136 zum Einlesen eines Datenträgers 138. Beispielsweise beinhaltet die Schnittstelle 136 ein CD-ROM- und/oder DVD-Lesegerät zum Lesen des Datenträgers 138. Auf dem Datenträger 138 ist ein so genanntes Update 140, dass heißt Daten zur Aktualisierung des Praxisprogramms 122, gespeichert. Teil des Updates 140 ist auch das Suchprofil 124 oder eine Aktualisierung des Suchprofils 124. Das Update 140 wird mit Hilfe eines Computers 142 des Erstellers des Praxisprogramms 122 generiert.

Alternativ oder zusätzlich verfügt das Datenverarbeitungssystem 100 über eine Kommunikationsschnittstelle 144 beispielsweise zur Anbindung des Datenverarbeitungssystems 100 an ein Netzwerk 146, wie zum Beispiel das Internet, ein Virtual Private Network (VPN) oder dergleichen. Über das Netzwerk 146 kann das Datenverarbeitungssystem 100 mit seiner Kommunikationsschnittstelle 144 eine Datei 148 empfangen, die das Update 140 und das Suchprofil beinhaltet. Dies kann in Form eines Push- oder Pull-Dienstes erfolgen.

Die Kommunikationsschnittstelle 144 kann auch zur Kommunikation zwischen dem Datenverarbeitungssystem 100 und ein oder mehreren Partnerunternehmer eines DMP verwendet werden. In der hier betrachteten Ausführungsform kann von der Kommunikationsschnittstelle 144 eine Meldung 150 in Form einer elektronischen Nachricht über das Netzwerk 146 an einen Computer 152 eines an dem DMP beteiligten Partnerunternehmen gesendet werden. Die Meldung 150 kann beispielsweise basierend auf dem Meldeformular 126 generiert werden.

Die Kommunikationsschnittstelle 144 kann ferner dazu dienen, Daten von einem telemedizinischen Gerät 180 abzurufen oder von einem telemedizinischen Gerät 180 zu empfangen. Das Netzwerk 146 kann dabei das Internet, ein Telekommunikationsnetzwerk oder eine beliebige drahtlose Verbindung zu dem telemedizinischen Gerät 180 darstellen. Dies schließt Mobilfunk-Kommunikation, als auch beliebige Nahfeld-Kommunikationsmittel wie Infrarot, Bluetooth usw. ein.

Um eine Kommunikation des Datenverarbeitungssystems 100 telemedizinischen Gerät 180 unter Verwendung des Netzwerks 146 und der Kommunikationsschnittstelle 144 zu ermöglichen, dient das Registriermodul 182 dazu, Informationen aufzunehmen oder zu versenden, welche eine Kontaktaufnahme von Datenverarbeitungssystem 100 und telemedizinischem Gerät 180 ermöglichen. Dies umfasst die Speicherung von IP-Adressen, Telefonnummern, das Versenden von Emails zum Zwecke der Übermittlung einer Kennung, Passwort und Internetseitenadresse u.v.m. Die Speicherung der besagten Daten erfolgt dabei in der Datenbank 102 des Datenverarbeitungssystems 100, wobei auf die Daten mit einem Zugriffsschlüssel wie der Patienten-ID zugegriffen werden kann. Es ist auch möglich, diese Daten verschlüsselt in der Datenbank 102 zu speichern, um einem unautorisierten Zugriff durch unbefugte Dritte vorzubeugen.

Eine Internetseitenadresse mit Kennung und Passwort wird insbesondere dann benötigt, wenn von seitens des Patienten eine Datenübertragung von dessen telemedizinischem Gerät 180 zum Datenverarbeitungssystem realisiert werden soll. Im Falle der Verwendung eindeutiger und einzigartiger Internetseitenadressen wird eine Kennung und Passwort nicht benötigt.

Nach Registrierung eines Patienten zur Teilnahme an einem DMP-Programm wird dem Patienten z.B. per Email ein einzigartiger, eindeutiger Link geschickt, auf welchen der Patient von seinem Heim-Computersystem zugreifen kann, um daraufhin auf eine Internetseite geleitet zu werden, wo der Patient vom telemedizinischen Gerät 180 erfasste Daten eingeben und an das Datenverarbeitungssystem 100 übermitteln kann. Alternativ zu einer manuellen Eingabe der besagten Daten des telemedizinischen Geräts 180 ist die automatische Datenübermittlung an das Heim-Computersystem bzw. die besagte Internetseite beim Verbinden des telemedizinischen Geräts 180 mit dem Heim-Computersystem des Patienten über eine USB, Infrarot oder Bluetooth Schnittstelle, möglich.

Ferner kann das Datenverarbeitungssystem 100 eine Schnittstelle 154 für eine automatische Datenerfassung von Patientendaten aufweisen, insbesondere zur Erfassung der in einer Chipkarte des Patienten gespeicherten Daten.

Das Datenverarbeitungssystem 100 ist beispielsweise über ein Netzwerk 156 mit verschieden Terminals der Arztpraxis verbunden, insbesondere mit den Terminals 158 und 160.

Bei dem Terminal 158 kann es sich um das Terminal des behandelnden Arztes handeln, welches dieser während eines Behandlungstermins nutzt, um auf die elektronische Patientenkarteikarte zuzugreifen und um beispielsweise Diagnose und/oder Verordnungsdaten einzutragen.

Bei dem Terminal 160 handelt es sich um einen Terminal, den beispielsweise die Assistentin des Arztes benutzt, um im Empfangsbereich der Arztpraxis Patienten zu registrieren. Hierzu ist das Terminal 160 mit einem Chipkartenlesegerät 162 ausgestattet. Das Chipkartenlesegerät 162 dient zum Zugriff auf eine Chipkarte 164 eines Patienten, beispielsweise dessen so genannte elektronische Gesundheitskarte.

Das Datenverarbeitungssystem 100 erhält beispielsweise mit dem Datenträger 138 oder über die Datei 148 das Suchprofil 124 oder eine Änderung des Suchprofils 124. Dies kann zusammen mit einem Update des Praxisprogramms 122 erfolgen. Nach der Speicherung des Suchprofils 124 wird die Programmkomponente 130 des Praxisprogramms 122 von dem Prozessor 128 ausgeführt, um auf das Suchprofil 124 zuzugreifen und um anschließend mit Hilfe des Suchprofils 124 durch Ausführung der Programmkomponente 132 eine Abfrage der Datenbank 102 durchzuführen. Bei dieser Datenbankabfrage wird hinsichtlich sämtlicher in der Datenbank 102 erfasster Patienten überprüft, ob diese den Kriterien des Suchprofils 124 entsprechen. Für solche Patientendatensätze, die das Suchprofil 124 erfüllen, wird mit Hilfe der Programmkomponente 134 ein Signal erzeugt, welches unterschiedliche Ausprägungen haben kann.

Beispielsweise wird durch das Signal jede der elektronischen Patientenkarteikarten 104, die die Kriterien des Suchprofils erfüllt, markiert, in dem beispielsweise jeweils ein so genanntes Flag für diese elektronischen Patientenkarteikarten gesetzt wird.

Anlässlich eines Behandlungstermins öffnet der behandelnde Arzt über sein Terminal 158 die elektronische Patientenkarteikarte 104 des betreffenden Patienten. Aufgrund der Markierung der elektronischen Patientenkarteikarte 104, z.B. in dem Datenfeld 116, wird der Arzt darüber informiert, dass der Patient die Kriterien für die Teilnahme an einem bestimmten DMP erfüllt. Der Arzt kann den Patienten über diese Möglichkeit informieren und ihn dahingehend beraten, an dem DMP teilzunehmen. Alternativ oder zusätzlich kann das Suchprofil auch ständig als Hintergrundprozess (sog. "background process") durchgeführt werden, insbesondere um die Erfüllung der Suchkriterien zu überprüfen, wenn neue Patientendaten eingegeben werden.

Nach einer Ausführungsform der Erfindung wird zunächst der Arzt über das DMP informiert. Beispielsweise wird anlässlich der Installation eines Updates der Praxissoftware eine Mitteilung für den Arzt angezeigt, um den Arzt über das DMP zu informieren. Der Arzt kann durch Eingabe einer Bestätigung signalisieren, dass seine Patienten ggf. an dem DMP teilnehmen sollen. Der Arzt wird dann für das DMP als ärztlicher Dienstleister registriert. Ferner wird auch das Praxispersonal des Arztes über das DMP informiert. Auch dies kann automatisch über die Praxissoftware erfolgen.

Nach einer Ausführungsform der Erfindung wird die Ausführung des Suchprofils als Hintergrundprozess nur gestartet, wenn der Arzt zuvor seine Bestätigung eingegeben hat. Dies ist jedoch optional, da der Hintergrundprozess auch automatisch ohne vorherige Information oder Bestätigung automatisch gestartet werden kann.

Nach einer Ausführungsform der Erfindung wird ohne vorherige Information oder Bestätigung des Arztes das Suchprofil installiert, um entsprechende Datenbankabfragen durchzuführen. Hierbei kann eine automatische Prüfung erfolgen, ob das Suchprofil in Anbetracht des Fachgebietes des Arztes für diesen Arzt überhaupt in Frage kommt. Das Fachgebiet des Arztes kann in kodiertes Form in der Praxissoftware hinterlegt sein. Z. B. anlässlich der Installation des Updates wird der entsprechende Kode gelesen, und es wird mit Hilfe des Kodes automatisch geprüft, ob dem Suchprofil ein entsprechender Kode zugeordnet ist. Nur wenn dies der Fall ist, wird das Suchprofil installiert.

Aufgrund der Markierung der elektronischen Patientenkarteikarte 104 kann automatisch aus der Dokumentenvorlage des Meldeformulars 126 eine Instanz erzeugt werden, in die die relevanten Angaben aus der elektronischen Patientenkarteikarte 104 automatisch übernommen werden können. Je nach Ausführungsform und Konfiguration des Datenverarbeitungssystems 100 kann dieses Meldeformular 126 ausgedruckt und unterschrieben werden, um die Teilnahme des Patienten an dem DMP zu dokumentieren. Das unterschriebene Meldeformular kann im Original oder als Kopie an eine oder mehrere der beteiligten Partnerunternehmen des DMP weitergeleitet werden.

Es ist jedoch auch möglich, dass das ausgefüllte Meldeformular medienbruchfrei in Form der elektronischen Meldung 150 über die Kommunikationsschnittstelle 144 und das Netzwerk 146 an den Computer 152 des oder der DMP Partnerunternehmen übermittelt wird.

Die Durchführung der Datenbankabfrage durch die Programmkomponente 132 und die Erzeugung der entsprechenden Signale zur Markierung der relevanten elektronischen Patientenkarteikarten 104 kann je nach der Komplexität des Suchprofils 124, der in der Datenbank 102 zu durchsuchenden Datenmenge und der Leistungsfähigkeit des Datenbankverarbeitungssystems 100 eine gewisse Zeit von einigen Sekunden oder Minuten in Anspruch nehmen. Um hierdurch den laufenden Betrieb der Arztpraxis nicht zu belasten, ist das Praxisprogramm 122 so konfiguriert, dass dessen Programmkomponenten 130, 132 und 134 zu einem bestimmten Zeitpunkt automatisch starten, zu dem die Arztpraxis nicht oder wenig ausgelastet ist, wie zum Beispiel während der Nacht.

Nach einer weiteren Ausführungsform der Erfindung wird das Suchprofil 124 nicht oder nicht nur für eine Abfrage der gesamten Datenbank 102 verwendet, sondern auch bezüglich eines neu erfassten Patientendatensatzes oder eines aktualisierten Patientendatensatzes. Beispielsweise werden die Programminstruktionen 130, 132 und 134 des Praxisprogramms 122 immer dann ausgeführt, wenn ein bereits vorhandener Patientendatensatz aktualisiert oder ergänzt wird, wenn beispielsweise also zusätzliche Diagnose- und/oder Verordnungsdaten von dem behandelnden Arzt eingegeben werden oder wenn ein neuer Patient erstmalig erfasst wird. Dies ist insbesondere dann der Fall, wenn das Suchprofil in einem Hintergrundprozess verwendet wird, mit dem ständig überprüft wird, ob aufgrund neu hinzugekommener oder geänderter Patientendaten die Suchkriterien hinsichtlich eines Patienten erfüllt werden.

Wenn beispielsweise der behandelnde Arzt über seinen Terminal 158 in die geöffnete elektronische Patientenkarteikarte 104 eine Diagnose eingibt, wird daraufhin automatisch das Suchprofil 124 gestartet, um es nur hinsichtlich dieser elektronischen Patientenkarteikarte 104 anzuwenden. Entsprechen die Angaben in der elektronischen Patientenkarteikarte 104 aufgrund der neu hinzugekommenen Diagnosedaten nunmehr dem Suchprofil 124, so wird das entsprechende Signal durch die Programmkomponente 134 erzeugt, beispielsweise also die elektronische Patientenkarteikarte 104 entsprechend markiert und/oder eine Instanz des Meldeformulars 136 angezeigt.

Entsprechend verhält es sich, wenn beispielsweise die Assistentin des Arztes einen neuen Patienten erfasst. Hierzu wird die Chipkarte 164 des Patienten in das Chipkartenlesegerät 162 eingeführt. Unter Umständen kann es erforderlich sein, ergänzende Daten über den Terminal 160 einzugeben. Diese neue erfassten Patientendatensätze werden über das Netzwerk 156 und die Schnittstelle 154 in das Datenverarbeitungssystem 100 eingegeben, um diese in der Datenbank in Form einer zusätzlichen elektronischen Patientenkarteikarte 104 zu speichern.

Aufgrund der Speicherung der zusätzlichen elektronischen Patientenkarteikarte 104 wird das Suchprofil 124 wiederum automatisch gestartet, um dessen Suchkriterien nun auf die neu hinzugekommene elektronische Patientenkarteikarte 104 anzuwenden. Wenn die Kriterien des Suchprofils durch die neu hinzugekommene elektronische Patientenkarteikarte 104 erfüllt werden, wird wiederum das Signal durch die Programmkomponente 134 erzeugt, so dass die Assistentin des Arztes dem Patienten unmittelbar über die Möglichkeit einer Teilnahme an dem DMP informieren kann oder alternativ der Arzt bei einem anschließenden Behandlungstermin durch Öffnen der elektronische Patientenkarteikarte 104 diese Information erhält und dann seinerseits den Patienten informieren kann.

Alternativ oder zusätzlich kann die Information hinsichtlich einer Teilnahmemöglichkeit eines Patienten auch unmittelbar über die Kommunikationsschnittstelle 144 in Form einer elektronischen Meldung 150 an den Patienten übermittelt werden, wie zum Beispiel per E-Mail, SMS oder Fax.

Ist ein Patient mit der Teilnahme an einem DMP einverstanden und ist der Patient in Besitz eines telemedizinischen Gerätes 180, so kann das Registriermodul 182 aufgerufen werden, um entweder dem Patienten eine Email mit einer Internetadresse zu schicken, über welche der Patient Daten seine telemedizinischen Gerätes 180 an das Datenverarbeitungssystem 100 übermitteln kann. Oder das Registriermodul 182 kann aufgerufen werden, um entsprechende Kontaktdaten des Patienten und dessen telemedizinischen Gerätes 180 aufzunehmen um es damit dem Arzt bzw. dem Datenverarbeitungssystem 100 zu ermöglichen, mit dem Patienten eine Kommunikation zum Empfang von Daten, welche durch das telemedizinischen Gerät 180 erfasst wurden, zu ermöglichen. Diese Kontaktdaten können z.B. eine Telefonnummer umfassen, was insbesondere bei telemedizinischen Geräten mit integriertem GSM-Modul notwendig ist.

Über die Teilnahmemöglichkeit des Patienten an einem DMP hinaus können im Fall eines "Treffers" auch andere Signale von dem Datenverarbeitungssystem 100 generiert werden. Wenn die Kriterien des Suchprofils von einem Datensatz eines Patienten erfüllt werden, können von der ärztlichen Diagnose abhängige weitere Mitteilungen angezeigt werden und/oder Aktionen automatisch oder teilautomatisch veranlasst werden. Wenn der Arzt beispielsweise die Diagnose "Herzinsuffizienz" mit dem entsprechenden ICD Code 50.1 in die Praxissoftware eingibt, und die Patientendaten daraufhin das Suchprofil erfüllten, kann eine Mitteilung hinsichtlich des weiteren Behandlungsablaufs angezeigt werden. Mit Hilfe diese Mitteilung kann der Arzt über eine für die Behandlung zuständige Klinik, zu verordnende Medikamente, ergänzende wissenschaftliche Informationen und/oder andere für den Arzt nützliche Informationen erhalten.

Insbesondere kann durch die Praxissoftware auch eine automatische Bestellung der zu verordnenden Medikamente nach einer entsprechenden Bestätigung durch den Arzt erzeugt werden. Die Bestellung kann in Form einer elektronischen Nachricht an jede Apotheke, insbesondere aber Versandapotheken, übermittelt werden.

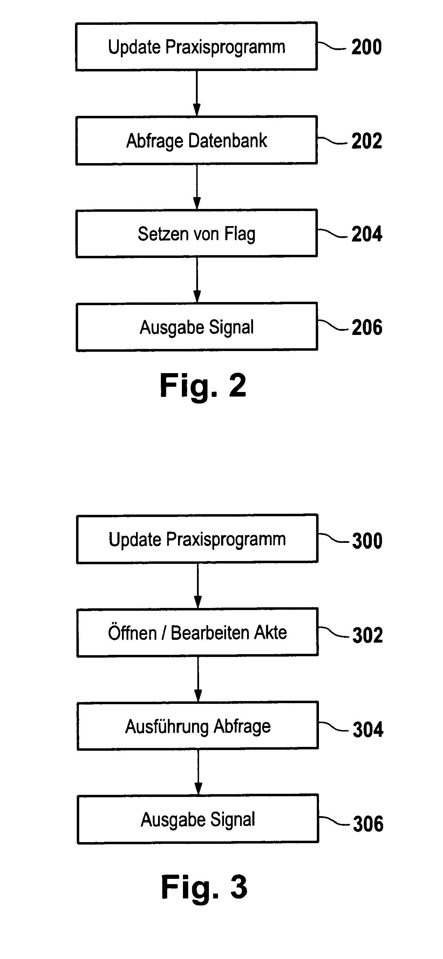

Die Figur 2 zeigt ein Flussdiagramm eines erfindungsgemäßen Verfahrens zur Erzeugung eines Signals, um Patienten für die Teilnahme an einem Disease Management Programm (DMP) zu identifizieren. In Schritt 200 erfolgt das Update eines Praxisprogramms eines entsprechenden Datenverarbeitungssystems. Dieses Update kann zum Beispiel mittels eines Datenträgers durchgeführt werden, zum Beispiel einer CD-ROM oder einer DVD. Ebenso ist es möglich, ein solches Update über das Internet oder ein beliebiges anderes Netzwerk durchzuführen. Nach Update des Praxisprogramms in Schritt 200 besteht in Schritt 202 die Möglichkeit zur Ausführung einer Abfrage der Datenbank mit einem Suchprofil, welches in dem Update für das Praxisprogramm enthalten ist. Eine Ausführung einer Abfrage der Datenbank mit dem Suchprofil kann dabei automatisch nach Update des Praxisprogramms durchgeführt werden. Alternativ dazu kann der Arzt die Ausführung der Abfrage der Datenbank manuell initiieren. Nach einer bevorzugten Ausführungsform der Erfindung erfolgt jedoch die Durchführung der Abfrage der Datenbank mit dem Suchprofil zu einem definierten Zeitpunkt, wie zum Beispiel während der Nacht, wenn das Datenverarbeitungssystem nicht oder nur wenig belastet ist. Dadurch wird eine erhöhte Systemauslastung des Datenverarbeitungssystems vermieden und der normale Betrieb des Datenverarbeitungssystems während des Praxisbetriebs nicht gestört.

Entspricht ein entsprechender Patientendatensatz dem Suchprofil, so wird in Schritt 204 der entsprechende Patientendatensatz mit einer Markierung versehen. Diese Markierung dient dazu, dass zum Beispiel beim nächsten Öffnen der entsprechenden Patientenakte durch den behandelnden Arzt ein Signal, beispielsweise durch die Anzeige eines Mitteilungsfensters, über die graphische Benutzerschnittstelle des Praxisprogramms, ausgegeben werden kann, wodurch der Arzt darüber informiert wird, dass der entsprechende Patient zur Teilnahme an einem Disease Management Programm geeignet ist. Die Ausgabe dieses Signals erfolgt in der Figur 2 in Schritt 206.

Die Figur 3 zeigt ein weiteres Flussdiagramm eines erfindungsgemäßen Verfahrens zur Erzeugung eines Signals. Ähnlich wie in der Figur 2 erfolgt in der Figur 3 in Schritt 300 ein Update eines Praxisprogrammes eines Datenverarbeitungssystems, zum Beispiel eines Arztinformationssystemes. Dieses Update beinhaltet unter anderem Suchprofile zur Ermittlung von Patienten, die sich für die Teilnahme an einem Disease Management Programm eignen. In der Figur 3 erfolgt im Schritt 302 das Öffnen oder das Bearbeiten einer Patientenakte durch einen behandelnden Arzt. Daraufhin wird in Schritt 304 eine Abfrage des Datensatzes, welcher durch den Arzt in Schritt 302 geöffnet oder bearbeitet wird, mit dem Suchprofil durchgeführt. Ergibt die Abfrage dieses Datensatzes mit dem Suchprofil, dass sich der zu dieser Patientenakte zugehörige Patient zur Teilnahme an einem Disease Management Programm eignet, so erfolgt in Schritt 306 die Ausgabe eines Signals an den behandelnden Arzt. Dieses Signal schließt eine textuelle und/oder graphische Markierung ein, ebenso wie Tonsignale oder ähnliches. Daraufhin kann der behandelnde Arzt den Patienten darüber unterrichten, dass dieser zur Teilnahme an einem Disease Management Programm geeignet ist.

Dadurch, dass die Ausführung einer Abfrage im Schritt 304 nur auf die jeweils aktuell geöffnete oder bearbeitete Akte angewendet wird, ist gewährleistet, dass aufgrund der permanenten Beobachtung aller Eingaben des behandelnden Arztes eine zeitnahe Unterrichtung von Patienten, dass diese zur Teilnahme an einem Disease Management Programm geeignet sind, erfolgen kann. Dies ist insbesondere dann wichtig, wenn es sich bei den Eingaben in eine Patientenakte zum Beispiel um eine Krankenhauseinweisung handelt, da in diesem Fall gewöhnlicherweise der Patient den behandelnden Arzt in Form eines Krankenhausarztes wechselt und damit ein Informationsfluss bezüglich einer Teilnahme an einem Disease Management Programm durch den ursprünglich behandelnden Arzt nicht mehr gewährleistbar ist.

### Bezugszeichenliste

- 100: Datenverarbeitungssystem
- 102: Datenbank
- 104: Elektronische Patientenkarteikarte
- 106: Datenfeld
- 108: Datenfeld
- 110: Datenfeld
- 112: Datenfeld
- 114: Datenfeld
- 116: Datenfeld
- 118: Schnittstelle
- 120: Datenspeichersystem
- 122: Praxisprogramm
- 124: Suchprofil
- 126: Meldeformular
- 128: Mikroprozessor
- 130: Programmkomponente
- 132: Programmkomponente
- 134: Programmkomponente
- 136: Schnittstelle
- 138: Datenträger
- 140: Update
- 142: Computer
- 144: Kommunikationsschnittstelle
- 146: Netzwerk
- 148: Datei
- 150: Meldung
- 152: Computer
- 154: Schnittstelle
- 156: Netzwerk
- 158: Terminal
- 160: Terminal
- 162: Chipkartenlesegerät
- 164: Chipkarte
- 180: Telemedizinisches Gerät
- 182: Registriermodul

## Patentansprüche

1. Datenverarbeitungssystem zur Erzeugung eines Signals mit
- einer Datenbank (102) zur Speicherung von Patientendatensätzen,
- einem Speicher (120) zur Speicherung eines Suchprofils (124),
- einem Mikroprozessor (128) zur Ausführung einer Abfrage der Datenbank mit dem Suchprofil, wobei das Suchprofil Kriterien für die Teilnahme eines Patienten an einem Disease Management Programm (DMP) beinhaltet, und zur Erzeugung des Signals, wenn das Suchprofil für einen der Patientendatensätze erfüllt wird.

2. Datenverarbeitungssystem nach Anspruch 1, wobei der zumindest eine Prozessor zur Ausführung eines Praxisprogramms (122) vorgesehen ist, und mit einer Schnittstelle (136; 144) zum Einlesen eines Updates (140) des Praxisprogramms zusammen mit dem Suchprofil.

3. Datenverarbeitungssystem nach Anspruch 1 oder 2, mit einer Schnittstelle (144) zum Empfang des Suchprofils über eine Kommunikationsverbindung.

4. Datenverarbeitungssystem nach Anspruch 1, 2 oder 3, wobei die Datenbank so ausgebildet ist, dass mit Hilfe des Suchprofils ermittelte Patientendatensätze mit einer Markierung (116) versehen werden.

5. Datenverarbeitungssystem nach Anspruch 4, wobei es sich bei der Markierung um einen Flag handelt.

6. Datenverarbeitungssystem nach Anspruch 4 oder 5, mit einer Nutzerschnittstelle zur Anzeige einer virtuellen Patientenkarteikarte (104) basierend auf ein oder mehreren der Patientendatensätze, wobei das Signal ausgegeben wird, wenn die virtuelle Patientenkarteikarte geöffnet ist und ein zu der Patientenkarteikarte gehörender Patientendatensatz mit der Markierung versehen ist.

7. Datenverarbeitungssystem nach einem der vorhergehenden Ansprüche, wobei die Ausgabe des Signals in Form einer Mitteilung für einen Benutzer des Computersystems erfolgt, und der Benutzer zu einer Aktion aufgefordert wird, beispielsweise zu einer Eingabe einer Bestätigung, zum Ausdrucken oder Versenden eines Formulars oder zum Versenden eines Formulars auf elektronischem Wege, insbesondere als E-Mail oder SMS.

8. Datenverarbeitungssystem nach einem der vorhergehenden Ansprüche, mit einer Kommunikationsschnittstelle (144) zur Meldung der Teilnahme eines oder mehrerer der Patienten, für die das Suchprofil erfüllt worden ist, an einen DMP-Teilnehmer.

9. Datenverarbeitungssystem nach einem der vorhergehenden Ansprüche, wobei das Suchprofil basierend auf den Datenfeldern einer virtuellen Patientenkarteikarte formuliert ist.

10. Datenverarbeitungssystem nach einem der vorhergehenden Ansprüche, mit einer Nutzerschnittstelle (118; 154) zur Erfassung von Patientendaten, die als Patientendatensätze abgespeichert werden, wobei das Suchprofil aufgrund der Erfassung und/oder der Abspeicherung für den betreffenden Patientendatensatz oder die betroffenen Patientendatensätze durch den Prozessor gestartet wird.

11. Datenverarbeitungsgerät nach Anspruch 10, wobei es sich bei der Benutzerschnittstelle um ein Chipkartenlesegerät (162) handelt.

12. Datenverarbeitungssystem nach einem der vorhergehenden Ansprüche, mit einem Modul, welches zur automatisierten Generierung einer Erinnerung an Termine in Form einer Nachricht für DMP-Teilnehmer ausgebildet ist, wobei die Termine in der Datenbank (102) zur Speicherung von Patientendatensätzen enthalten sind.

13. Datenverarbeitungssystem nach Anspruch 12, mit einer Kommunikationsschnittstelle, wobei die Kommunikationsschnittstelle zur Übermittlung der Nachricht an DMP-Teilnehmer ausgebildet ist, wobei die Übermittlung per Telefon und/oder E-Mail und/oder SMS und/oder Brief durchführbar ist.

14. Datenverarbeitungssystem nach einem der vorhergehenden Ansprüche, mit einem Modul zur Durchführung statistischer Auswertungen über den Gesundheitszustand von DMP-Teilnehmern.

15. Datenverarbeitungssystem nach einem der vorhergehenden Ansprüche, mit einer Schnittstelle zur Kommunikation mit telemedizinischen Geräten von DMP-Teilnehmern.

16. Datenverarbeitungssystem nach einem der vorigen Ansprüche, wobei die Patientendaten Kontaktdaten zum Kontakt des Datenverarbeitungssystems mit dem telemedizinischen Gerät eines DMP-Teilnehmers umfassen, wobei die Kontaktdaten zum Kontakt des Datenverarbeitungssystems mit dem telemedizinischen Gerät mit einem Registriermodul (182) erfassbar sind.

17. Digitales Speichermedium mit Programmmitteln zur Erzeugung eines Signals, wobei die Programmmittel beinhalten:
- eine erste Programmkomponente (122) zur Speicherung von Patientendatensätzen in einer Datenbank (102),
- einer zweiten Programmkomponente (132) zum Zugriff auf ein Suchprofil (124),
- eine dritte Programmkomponente (132; 134) zur Ausführung einer Abfrage der Datenbank mit dem Suchprofil, wobei das Suchprofil Kriterien für die Teilnahme eines Patienten an einem DMP beinhaltet und zur Erzeugung des Signals, wenn das Suchprofil für einen der Patientendatensätze erfüllt wird.

18. Digitales Speichermedium nach Anspruch 17, wobei die zweite Programmkomponente zum Zugriff auf einen Datenträger (138) ausgebildet ist, um von dort das Suchprofil einzulesen.

19. Digitales Speichermedium nach Anspruch 17 oder 18, wobei die zweite Programmkomponente zum Empfang des Suchprofils über eine Kommunikationsverbindung ausgebildet ist.

20. Digitales Speichermedium nach Anspruch 18, 18 oder 19, wobei die dritte Programmkomponente so ausgebildet ist, dass mit Hilfe des Suchprofils ermittelte Patientendatensätze mit einer Markierung versehen werden.

21. Digitales Speichermedium nach einem der Ansprüche 17 bis 20, wobei die erste, zweite und dritte Programmkomponente Teil eines Praxisprogramms (122) sind, und wobei das Praxisprogramm zur Anzeige einer virtuellen Patientenkarteikarte ausgebildet ist, wobei das Signal dann ausgegeben wird, wenn die virtuelle Patientenkarteikarte geöffnet wird und ein zu der Patientenkarteikarte gehörender Datensatz mit der Markierung versehen ist.

22. Digitales Speichermedium nach einem der Ansprüche 17 bis 21, mit einer vierten Programmkomponente zur Erfassung von Patientendaten über eine Chipkartenschnittstelle (154, 162), wobei die dritte Programmkomponente aufgrund der Erfassung der Patientendaten gestartet wird.

23. Digitales Speichermedium nach einem der Ansprüche 17 bis 22, mit einer fünften Programmkomponente zur automatisierten Generierung einer Erinnerung an Termine in Form einer Nachricht für DMP-Teilnehmer, wobei die Termine in der Datenbank (102) zur Speicherung von Patientendatensätzen enthalten sind.

24. Digitales Speichermedium nach einem der Ansprüche 17 bis 23, mit einer sechsten Programmkomponente zur Durchführung statistischer Auswertungen über den Gesundheitszustand von DMP-Teilnehmern.

25. Digitales Speichermedium nach einem der Ansprüche 17 bis 24, mit einer siebten Programmkomponente zum Datenaustausch mit telemedizinischen Geräten eines DMP-Teilnehmers.

26. Verfahren zur Erzeugung eines Signals durch ein Datenverarbeitungssystem (100), wobei das Datenverarbeitungssystem (100)
- eine Datenbank (102) zur Speicherung von Patientendatensätzen aufweist,
- einen Speicher (120) zur Speicherung eines Suchprofils (124) aufweist, wobei das Suchprofil Kriterien für die Teilnahme eines Patienten an einem Disease Management Programm (DMP) beinhaltet und
- einen Mikroprozessor (128) zur Ausführung einer Abfrage der aufweist,
mit den folgenden Schritten:
- Abfrage der Datenbank (102) mit dem Suchprofil (124),
- Ausgabe eines Signals.
